# EUROPÄISCHE PATENTANMELDUNG

(11) **EP 1 158 757 A1**
(43) Veröffentlichungstag der Anmeldung: **28.11.2001**
(21) Anmeldenummer: 00810444.0
(22) Anmeldetag: 22.05.2000
(51) Int. Cl.: H04M 15/00

(54) **System und Verfahren zur automatischen Bestimmung eines Providers für Telekommunikationsverbindungen**

(71) Anmelder: Swisscom AG, 3000 Bern 29 (CH)
(72) Erfinder: Messmer, Bruno, 3600 Thun (CH); Krone, Oliver, 3072 Ostermundigen (CH)
(74) Vertreter: BOVARD AG - Patentanwälte

(57) **Zusammenfassung**

System und Verfahren zur automatischen Bestimmung eines optimalen Providers für Telekommunikationsverbindungen unter Berücksichtigung von Tarifinformationen verschiedener Provider und unter Berücksichtigung einer Auswertung von Verbindungsdaten der vom Kunden getätigten Verbindungen, wobei das System ein User-Modul und ein oder mehrere Provider-Module umfasst, welche das User-Modul mit Tarifinformationen versorgen, und wobei die Tarifinformationen Tariffunktionen und/oder Vertragsfunktionen umfassen, welche als ausführbare Programmkomponenten implementiert sind. Das System umfasst weiter Vertragsindikatoren, mit welchen das User-Modul dem Provider-Modul des gemäss obigem Verfahren bestimmten optimalen Providers den Abschluss eines Vertrages anzeigt. Auf Grund dieser Anzeige werden die gewünschten Verbindungen vom User-Modul automatisch über den gemäss obigem Verfahren bestimmten optimalen Provider hergestellt, während der Kunde vom optimalen Provider für die Vertragsdauer mit Telekommunikationsverbindungen versorgt wird.

## Beschreibung

Die vorliegende Erfindung betrifft ein System und ein Verfahren zur automatischen Bestimmung eines Providers für Telekommunikationsverbindungen unter Berücksichtigung von Tarifinformationen verschiedener Provider und zur automatischen Herstellung der gewünschten Verbindungen über den derart bestimmten Provider. Entsprechende Verfahren sind unter der Bezeichnung "Least Cost Routing" (LCR) bekannt.

Im liberalisierten Telekommunikationsmarkt kann der Kunde aus den Angeboten mehrerer Netzbetreiber oder Provider auswählen. Die Tarifstrukturen und Rabattsysteme der verschiedenen Provider haben inzwischen einen Umfang erreicht, der es dem einzelnen Kunden schwer macht, den Überblick über die Vielzahl von Angeboten zu behalten. Moderne Telekommunikationsanlagen (TK-Anlagen) sind deshalb mit Least Cost Routing-Funktionen ausgestattet oder entsprechend nachrüstbar, um den Kunden bei der Wahl der günstigsten Telekommunikationsverbindung und/oder des günstigsten Providers zu unterstützen. Für ältere Anlagen gibt es Zusatzgeräte, sogenannte Least Cost Router oder Telefon-Broker-Kästen, welche diese Aufgabe übernehmen.

Das Dokument WO 98/08335 beschreibt ein Call Management System zur automatischen Bestimmung des günstigsten Providers. Dabei fängt das System die vom Kunden gewählte Nummer ab, bestimmt die optimale Route für den Anruf, und stellt die Verbindung über den günstigsten Provider her. Ein Tarifinformations-Server erfasst die Telefontarife und Tarifänderungen der Provider und lädt die Tarifdaten, oder eine Auswahl davon, in den lokalen Computer in der TK-Anlage des einzelnen Kunden. Im lokalen Computer sind die für die Tarifberechnung benötigten Tarifdaten in verschiedenen Datenbanken gespeichert. Die beschriebenen Datenbanken enthalten eine Vielzahl von Tarifparametern wie z.B. Grundgebühren, Abhängigkeit der Gebühren vom Wochentag und der Tageszeit, geographische Ausdehnung der Tarifzonen, minimale Gesprächszeit, zu erwartende Gesprächsdauer, Mengenrabatte, und falls ein Vertrag zwischen dem Kunden und einem Provider besteht, zusätzliche Rabatte gemäss Vertrag und allfällige Optional Calling Plans (OCPs). Weiter verfügt der lokale Computer in dem beschriebenen System über ein Abrechnungsmodul, welches sämtliche Anrufe erfasst, welche über das System getätigt werden. Die Abrechnungsdaten dienen einerseits zu Berichtszwecken und andererseits zur Bestimmung der optimalen Verbindung, insbesondere zur Berechnung von Mengenrabatten.

Die Vielzahl der gespeicherten Tarifparameter, welche im Dokument WO 98/08335 beschrieben werden (siehe z.B. OCP-Parameterliste auf Seite 38 und 39), kann jedoch nicht darüber hinwegtäuschen, dass die beschriebene Datenbankorganisation einen fixen Rahmen für die Tarifinformationen darstellt. In diesem Rahmen ist das Herunterladen neuer Tarifdaten vom Tarifinformations-Server in den lokalen Computer des einzelnen Kunden problemlos möglich. Sobald aber ein neues Tarifmodell zusätzliche Tarifparameter benötigt, die nicht in der bisherigen Datenstruktur enthalten sind, so genügt eine blosse Aktualisierung der in den Datenbanken gespeicherten Werte nicht, und das System stösst an seine Grenzen. Das beschriebene Call Management System hat, wie alle Least Cost Routing-Systeme aus dem Stand der Technik, nur eine beschränkte Funktionalität. Die Funktionalität ist beschränkt auf bestimmte Tarifmodelle und Rabattsysteme, welche bei der Implementierung der Datenstrukturen und Berechnungsgänge fest in das System eingebaut wurden. Diese Beschränkung der Funktionalität wird als sehr nachteilig empfunden.

Eine wichtige Rolle bei der Bestimmung des günstigsten Providers spielen die Verträge zwischen dem Kunden und den Providern. Im Call Management System gemäss Dokument WO 98/08335 werden die Vertragsbedingungen, wie beispielsweise spezielle Mengenrabatte, Optional Calling Plans (OCPs), etc., zusammen mit den übrigen Tarifdaten vom Tarifinformations-Server zur Verfügung gestellt. Die eigentlichen Vertragsverhandlungen und -abschlüsse erfolgen ausserhalb des Call Management Systems, und der Kunde muss das Ergebnis der Verhandlungen von Hand ins System eingeben. Zur Eingabe der Vertragsdaten besitzt der lokale Computer gemäss Dokument WO 98/08335 ein User Interface, über das die Namen der Provider, mit welchen Verträge ausgehandelt wurden (in der Beschreibung "primary and secondary carrier" genannt), sowie die Bezeichnung der OCPs und das Startdatum eingegeben werden. Dieses Vorgehen wird als umständlich angesehen.

Es ist eine Aufgabe der vorliegenden Erfindung, ein neues und besseres Least Cost Routing-Verfahren und Least Cost Routing-System vorzuschlagen, welche gegenüber dem Stand der Technik eine wesentlich erweiterte Funktionalität aufweisen.

Es ist eine weitere Aufgabe der vorliegenden Erfindung, die Abwicklung von Vertragsabschlüssen zwischen dem Kunden und den Providern, einschliesslich automatischer Online-Vertragsabschlüsse, in ein Least Cost Routing-Verfahren und Least Cost Routing-System zu integrieren.

Es ist eine weitere Aufgabe der vorliegenden Erfindung, ein adaptives oder lernfähiges Least Cost Routing-Verfahren und Least Cost Routing-System vorzustellen, welches Verfahren und System für einen gewissen Zeitraum unter Berücksichtigung von Tarifinformationen verschiedener Provider und unter Berücksichtigung einer Auswertung von Verbindungsdaten der vom Kunden getätigten Verbindungen automatisch den oder die günstigsten Provider bestimmt; welches Verfahren und System den Abschluss von Verträgen zwischen dem Kunden und dem derart bestimmten Provider oder den derart bestimmten Providern, einschliesslich den automatischen Abschluss von Online-Verträgen, unterstützt; und welches Verfahren und System die gewünschten Telekommunikationsverbindungen automatisch über den oder die derart bestimmten Provider herstellt.

Gemäss der vorliegenden Erfindung wird das erstgenannte Ziel insbesondere durch die Merkmale der unabhängigen Ansprüche erreicht. Weitere vorteilhafte Ausführungsformen gehen aus den abhängigen Ansprüchen und aus der Beschreibung hervor.

Das erstgenannte Ziel eines Least Cost Routing-Verfahrens und Least Cost Routing-Systems mit wesentlich erweiterter Funktionalität wird in der vorliegenden Erfindung insbesondere dadurch erreicht, dass die Tarifinformationen Tariffunktionen umfassen, und dass das User-Modul und die Provider-Module Mittel umfassen, um die Tariffunktionen als ausführbare Programmkomponenten zu speichern und/oder zu übermitteln und/oder zu empfangen und/oder aufzurufen und/oder auszuführen.

Die vorliegende Erfindung lässt sich auf ein System und Verfahren zur automatischen Bestimmung eines oder mehrerer Provider für Telekommunikationsverbindungen anwenden, wobei das System ein User-Modul und eines oder mehrere Provider-Module umfasst, und das User-Modul und die Provider-Module Kommunikationsmittel umfassen, um miteinander zu kommunizieren, und die Provider-Module Mittel umfassen, um das User-Modul mit Tarifinformationen zu versorgen, und das User-Modul Optimierungsfunktionen umfasst, um auf Grund der Tarifinformationen den oder die optimalen Provider für die vom Kunden gewünschten Telekommunikationsverbindungen zu bestimmen, und das User-Modul weitere Mittel umfasst, um die gewünschten Telekommunikationsverbindungen über den oder die derart bestimmten Provider herzustellen, und wobei die Tarifinformationen Tariffunktionen umfassen, welche als ausführbare Programmkomponenten implementiert sind, beispielsweise als Objekte im Sinne der objektorientierten Programmierung oder als Softwaremodule oder als lauffähige Programmdateien oder als Applikationen wie beispielsweise Programm-Applets. Der Aufruf einer solchen Tariffunktion bewirkt, dass aus bestimmten, vordefinierten Eingangsparametern bestimmte Ausgangsparameter berechnet werden. Die Eingangsparameter umfassen mindestens die Zieladresse und/oder -nummer der gewünschten Verbindungen und die Ausgangsparameter mindestens die zu erwartenden Kosten für die gewünschten Verbindungen. Das User-Modul und die Provider-Module umfassen Mittel, um die Tariffunktionen zu speichern und/oder zu übermitteln und/oder zu empfangen und/oder aufzurufen und/oder auszuführen.

Die Tariffunktionen gemäss vorliegender Erfindung enthalten Regeln oder Kriterien, nach welchen die Telekommunikationsverbindungen in Tarifklassen eingeteilt werden. Diese Klassierung bildet die Grundlage für die Preisberechnung. Die Klassierung erfolgt auf Grund von Kriterien, welche beispielsweise die Zieladresse oder -nummer, die Verbindungsdauer, den Setup-Zeitpunkt, den Wochentag und/oder das Upstream- und Downstream-Datenvolumen der Telekommunikationsverbindungen berücksichtigen. Jedem Telefonbenützer sind z.B. die Klassierungen in lokale Verbindungen, Fernverbindungen und internationale Verbindungen, oder in Normal-, Nieder-, Nacht- und Wochenendtarif bekannt. Neben solchen Grundtarifklassen kann ein Provider beliebige Tarifklassen in die erfindungsgemässen Tariffunktionen aufnehmen. Verfügt ein Provider z.B. zwischen den Orten A und B zur Tageszeit T1 bis T2 über freie Leitungskapazitäten, kann er eine eigene Tarifklasse für Verbindungen von A nach B zur Zeit T1 bis T2 in seine Tariffunktionen einbauen und die Verbindungen in dieser Tarifklasse zu einem besonders günstigen Preis anbieten. Weitere Beispiele von Tarifklassen sind im Zusammenhang mit den weiter unten beschriebenen Vertragsfunktionen aufgeführt.

Die Tariffunktionen gemäss vorliegender Erfindung haben den Vorteil, dass die Provider völlige Freiheit haben bei der Gestaltung ihrer Tarifmodelle. Die Schnittstelle zwischen den von den Providern gelieferten Tariffunktionen und dem User-Modul beschränkt sich auf den Austausch der Eingangs- und Ausgangsparameter. Dank der einfachen Schnittstelle kann jeder Provider Tariffunktionen erzeugen und dem Kunden zur Verfügung stellen, ohne dass er sich im Detail um die Hard- und Software des vom Kunden verwendeten User-Moduls zu kümmern braucht. Der Kunde andererseits profitiert automatisch von den Angeboten der Provider und ist nicht mehr abhängig von einem bestimmten Provider oder Lieferanten, der die Tarifinformationen so aufbereitet, dass sie kompatibel sind mit seinem Least Cost Routing-System.

In einer bevorzugten Ausführungsform umfasst das User-Modul eine Analyseeinheit zur Erfassung und Auswertung von Verbindungsdaten der vom Kunden getätigten Verbindungen, sowie eine Optimierungseinheit mit Optimierungs- und/oder Lernfunktionen, um die Resultate dieser Auswertung bei der Bestimmung des optimalen Providers oder der optimalen Provider zu berücksichtigen.

Vorteilhafterweise umfassen das User-Modul und/oder die Provider-Module Vertragsindikatoren, um anzuzeigen, ob zwischen dem Kunden und einem ausgewählten Provider ein Vertrag abgeschlossen wurde, wobei das User-Modul Mittel umfasst, um die genannten Vertragsindikatoren im User-Modul und/oder im Provider-Modul des ausgewählten Providers zu setzen und/oder zu löschen. Dies ermöglicht es dem Kunden, via User-Modul Online-Verträge mit den Providern abzuschliessen.

Vorteilhafterweise umfassen die Tarifinformationen Vertragsbedingungen, welche Vertragsfunktionen enthalten, wobei das User-Modul und die Provider-Module Mittel umfassen, um die Vertragsfunktionen als ausführbare Programmkomponenten zu speichern und/oder zu übermitteln und/oder zu empfangen und/oder aufzurufen und/oder auszuführen, und wobei das User-Modul zusätzlich eine Optimierungseinheit umfasst, um für einen gewissen Zeitraum auf Grund der Tarifinformationen und/oder Tariffunktionen und auf Grund der Vertragsbedingungen und/oder Vertragsfunktionen und auf Grund der genannten Auswertung von Verbindungsdaten der vom Kunden getätigten Verbindungen den oder die günstigsten Provider zu ermitteln. Die Vertragsfunktionen sind eine spezielle Form von Tariffunktionen, die sich dadurch auszeichnen, dass sie nur wirksam sind, wenn der betreffende Vertragsindikator gesetzt ist, d.h. wenn zwischen dem Kunden und dem ausgewählten Provider ein Vertrag besteht.

Die Vertragsfunktionen enthalten, genau wie die Tariffunktionen, Tarifklassen, welche als Grundlage für die Preisberechnung dienen. Häufig wird bei der Klassierung zusätzlich das Verbindungsvolumen über einen gewissen Zeitraum berücksichtigt. Typische Tarifklassen, welche das Verbindungsvolumen berücksichtigen, sind die Tarifklassen für die Mengenrabatte. Darüber hinaus können die Tarif- und/oder Vertragsfunktionen auch sehr spezielle Tarifklassen enthalten, wie beispielsweise:
- Zeitintervall, während welchem die Verbindungsdichte mehr als das Doppelte des Tagesmittels beträgt, oder
- wiederholte Verbindungen mit der selben Zielnummer für die drei Zielnummern mit den höchsten monatlichen Verbindungskosten.

Für Verbindungen, welche in die genannten Tarifklassen fallen, kann der betreffende Provider Spezialtarife vorsehen. Dank der oben beschriebenen Tarif- und Vertragsfunktionen lassen sich problemlos neue Tarifklassen undmodelle implementieren, ohne dass die Software im User-Modul angepasst werden muss.

In einer bevorzugten Ausführungsvariante umfasst das User-Modul Mittel, um die Vertragsindikatoren im User-Modul und/oder in den Provider-Modulen der optimalen Provider automatisch zu setzen und/oder zu löschen. Dies ermöglicht es dem User-Modul, den Provider-Modulen der optimalen Provider den Abschluss von Online-Verträgen automatisch anzuzeigen, und nach Ablauf der Vertragsdauer die neuen Online-Verträge automatisch an die aktuellen Tarifinformationen und an das aktuelle Kundenprofil (d.h. an die aktuelle Auswertung von Verbindungsdaten der vom Kunden getätigten Verbindungen) anzupassen. Auf Grund der oben beschriebenen Merkmale stellt das Least Cost Routing-System gemäss der vorliegenden Erfindung ein adaptives oder lernfähiges System dar, welches dem Kunden unter Berücksichtigung der aktuellen Tarifinformationen und des aktuellen Kundenprofils automatisch und ohne grossen Aufwand zu einer günstigen Strategie für seine Telekommunikationsverbindungen verhilft.

In einer weiteren bevorzugten Ausführungsvariante umfassen das User-Modul und die Provider-Module Mittel, um auf Initiative der Provider aktiv neue Tarifinformationen in das User-Modul zu laden. Dies ermöglicht es den Providern, schnell auf die Marktentwicklung zu reagieren, und das User-Modul online mit den neuesten Tarifmodellen und den zugehörigen Tarifinformationen und/oder Tariffunktionen zu versehen. Auf diese Weise können auch Nischenplätze erfolgreich besetzt und optimal genutzt werden.

Das Ausführungsbeispiel zur vorliegenden Erfindung wird anhand der folgenden Figuren näher beschrieben:
Fig. 1 zeigt ein Blockdiagramm des Ausführungsbeispiels zur vorliegenden Erfindung,
Fig. 2A ein Blockdiagramm einer Ausführungsform eines User-Moduls,
Fig. 2B ein Blockdiagramm einer Ausführungsform einer Optimierungseinheit zur Bestimmung des optimalen Providers für Telekommunikationsverbindungen,
Fig. 3A ein Blockdiagramm einer bevorzugten Ausführungsform eines User-Moduls,
Fig. 3B ein Blockdiagramm einer bevorzugten Ausführungsform einer Optimierungseinheit zur Bestimmung des optimalen Providers für einen vorgegebenen Zeitraum.

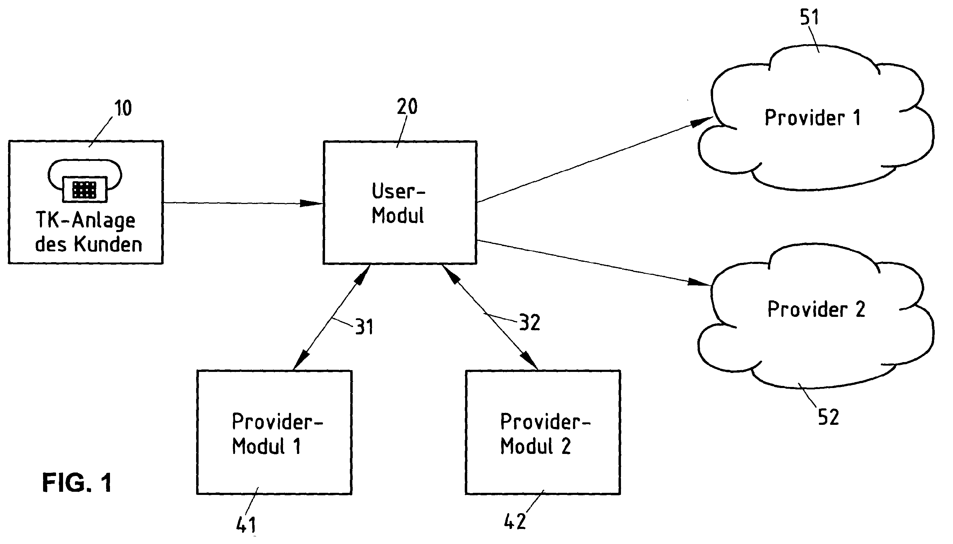

Fig. 1 illustriert in schematischer Weise den prinzipiellen Aufbau eines Systems zur automatischen Bestimmung eines oder mehrerer Provider für Telekommunikationsverbindungen gemäss dem Ausführungsbeispiel zur vorliegenden Erfindung. Die Bezugsziffer 10 bezeichnet eine TK-Anlage eines Kunden. Dabei kann es sich sowohl um ein einzelnes TK-Endgerät wie beispielsweise ein Telefon für den Anschluss ans Festnetz, ein Mobilfunktelefon, ein FAX-Gerät oder einen PC mit Modem oder ISDN-Adapter handeln, als auch um eine Grossanlage mit Hunderten von Anschlüssen. Der Fachmann wird das Ausführungsbeispiel unschwer an die analoge wie digitale Übermittlungstechnik anpassen können. Die TK-Anlage 10 ist via ein User-Modul 20 mit den Providern 51 und 52 verbunden. Eine zentrale Funktion des User-Moduls 20 ist die automatische Bestimmung des günstigsten Providers oder der günstigsten Provider für Telekommunikationsverbindungen unter Berücksichtigung von Tarifinformationen verschiedener Provider, und die Herstellung der gewünschten Verbindungen über den oder die günstigsten Provider. Die entsprechende Funktion ist im Stand der Technik unter der Bezeichnung "Least Cost Router" oder "Router" bekannt. Das User-Modul 20 ist im vorliegenden Ausführungsbeispiel als separate Einheit implementiert, welche über eigene Hardware- und Softwarekomponenten verfügt, insbesondere über mindestens einen eigenen Prozessor, einen eigenen Router und eigene Speichermedien zum Speichern der Tarifinformationen. In einer Ausführungsvariante ist das User-Modul 20 in die TK-Anlage 10 integriert, wobei in diesem Fall Komponenten der TK-Anlage, wie Prozessor, Router, Speichermedien und Kommunikationsmittel, vom User-Modul mitbenutzt werden. Spezifisch für die vorliegende Erfindung ist, dass die Tarifinformationen der Provider Tariffunktionen umfassen, welche als ausführbare Programmkomponenten implementiert sind, beispielsweise als Unterprogramme, oder Subroutinen, oder Applikationen wie z.B. Programm-Applets. Zur Versorgung mit Tarifinformationen und/oder Tariffunktionen ist das User-Modul 20 über Datenkanäle 31 und 32 mit den Provider-Modulen 41 und 42 verbunden. Die Datenkanäle sind beispielsweise als TCP/IP-Verbindungen über das Internet implementiert. Selbstverständlich sind auch Datenverbindungen über andere Träger, wie z.B. über ISDN oder analoge Wählleitungen oder drahtlose Träger wie beispielsweise Mobilfunknetze möglich. Die Provider-Module 41 und 42 umfassen ein Host-System, welches über die Datenkanäle 31 und 32 mit dem User-Modul 20 kommuniziert und auf welchem die zu kommunizierenden Tarifinformationen und/oder Tariffunktionen gespeichert sind. In einer Ausführungsvariante besteht das Host-System aus einem File-Server, auf welchem die Tariffunktionen als ausführbare Programmdateien gespeichert sind. Die Tarifinformationen und/oder Tariffunktionen werden von den Provider-Modulen 41 und 42 in ein Speichermedium des User-Moduls 20, beispielsweise in ein EEPROM oder auf eine Harddisk, geladen. Entsprechende Kommunikationsprogramme, beispielsweise auf der Basis des File Transfer Protocol (FTP), sind dem Fachmann bekannt. Die Software zum Speichern, Aufrufen oder Ausführen der Tariffunktionen im User-Modul ist vom Fachmann unschwer zu erstellen, da die genannten Operationen von allen gängigen Compilern, Betriebssystemen und Ausführungsplattformen, wie beispielsweise der JAVA (TM) Virtual Machine, unterstützt werden.

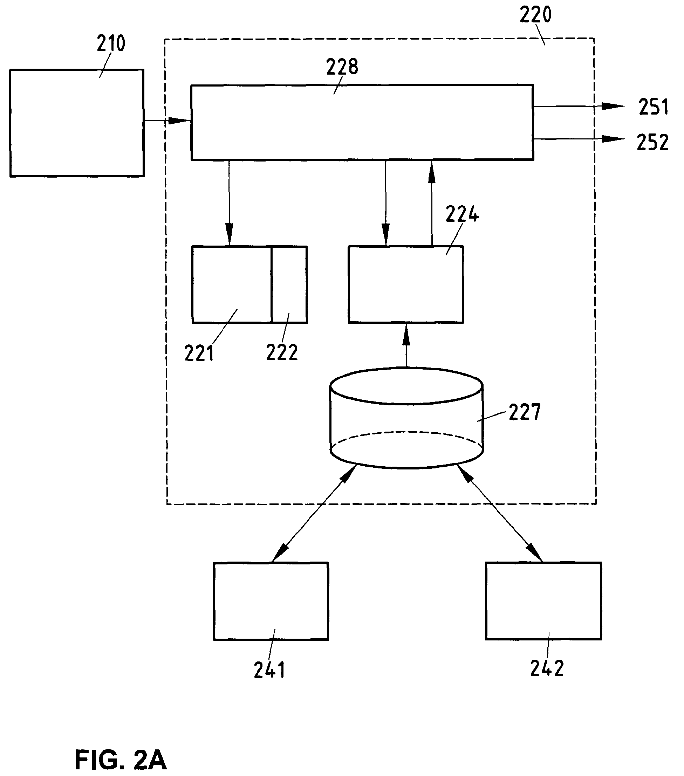

Die nachfolgende Beschreibung einer Ausführungsform des User-Moduls nimmt Bezug auf Fig. 2A. Wie aus Fig. 2A ersichtlich, ist das User-Modul 220 einerseits mit der TK-Anlage 210 des Kunden und andererseits mit den Providern 251 und 252 verbunden. Das User-Modul 220 umfasst ein Speichermedium 227, beispielsweise ein EEPROM oder eine Harddisk, zum Speichern von Tarifinformationen und/oder Tariffunktionen. Zur Versorgung mit Tarifinformationen und/oder Tariffunktionen steht das User-Modul in Verbindung mit den Provider-Modulen 241 und 242. Weiter umfasst das User-Modul 220 eine Analyseeinheit 221 zum Erfassen und Auswerten von Verbindungsdaten der vom Kunden getätigten Verbindungen und einen Speicher 222 zum Speichern der Verbindungsdaten und/oder der Auswertung. Die Auswertung umfasst die Bestimmung statistischer Grössen wie beispielsweise mittlere Verbindungsdauer, Gesamtvolumen aller in einem bestimmten Zeitraum getätigten Verbindungen und Verteilung der Verbindungen nach Wochentag, Tageszeit, Destinationen und Provider. Als weitere Komponenten umfasst das User-Modul eine Optimierungseinheit 224 zur automatischen Bestimmung des optimalen Providers oder der optimalen Provider für die Telekommunikationsverbindungen des Kunden unter Berücksichtigung der Tarifinformationen und/oder Tariffunktionen und der Auswertung von Verbindungsdaten der vom Kunden getätigten Verbindungen und eine Verbindungseinheit 228 zur automatischen Herstellung der gewünschten Verbindungen über den oder die optimalen Provider.

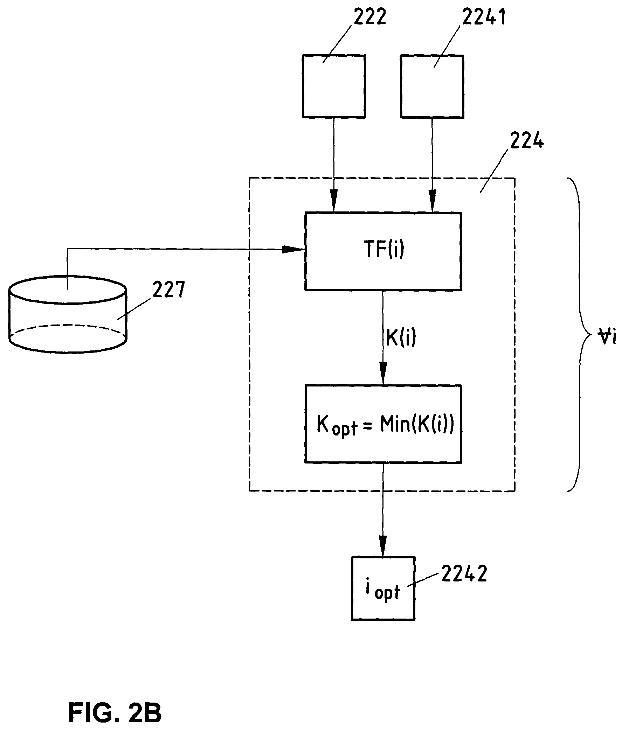

Eine bevorzugte Ausführungsform einer Optimierungseinheit 224 zur Bestimmung des optimalen Providers ist in Fig. 2B dargestellt. Die Optimierungseinheit 224 umfasst ein Computerprogramm (nicht gezeigt in Fig. 2B), welches Daten aus drei Quellen benützt, nämlich Tariffunktionen TF(i) von einem Speichermedium 227 (wobei (i) eine Indexvariable bezeichnet), die oben erwähnte Auswertung von Verbindungsdaten der vom Kunden getätigten Verbindungen aus einem Speicher 222 und eine Adresse oder Nummer einer vom Kunden gewünschten Verbindung aus einem Zwischenspeicher 2241. Das Computerprogramm der Optimierungseinheit 224 ruft in einem ersten Schritt eine Tariffunktion TF(i) auf, wobei die Adresse oder Nummer der vom Kunden gewünschten Verbindung und die Auswertung von Verbindungsdaten der vom Kunden getätigten Verbindungen als Eingangsparameter dienen. Die Tariffunktion TF(i) berechnet auf Grund der Eingangsparameter die zu erwartenden Kosten K(i) der gewünschten Verbindung, und das Computerprogramm der Optimierungseinheit 224 vergleicht anschliessend die zu erwartenden Kosten K(i) mit den zu erwartenden Kosten aus vorangehenden Berechnungsgängen, um diejenige Tariffunktion TF(iₒₚₜ) zu bestimmen, welche die kleinsten zu erwartenden Kosten Kₒₚₜ ergibt (d.h. Kₒₚₜ = Min (K(i)) ). Die so bestimmte Tariffunktion TF(iₒₚₜ) und/oder deren Indexvariable iₒₚₜ werden in einem Ausgangsspeicher 2242 gespeichert. Dieser Berechnungsgang wird für alle in Frage kommenden Tariffunktionen TF(i) wiederholt. Die Tariffunktion TF(iₒₚₜ) ist mit einem Provider verknüpft, von welchem die Tariffunktion TF(iₒₚₜ) stammt, so dass die Tariffunktion TF(iₒₚₜ) und/oder deren Indexvariable iₒₚₜ im Ausgangsspeicher 2242 angeben, über welchen Provider die gewünschte Verbindung herzustellen ist.

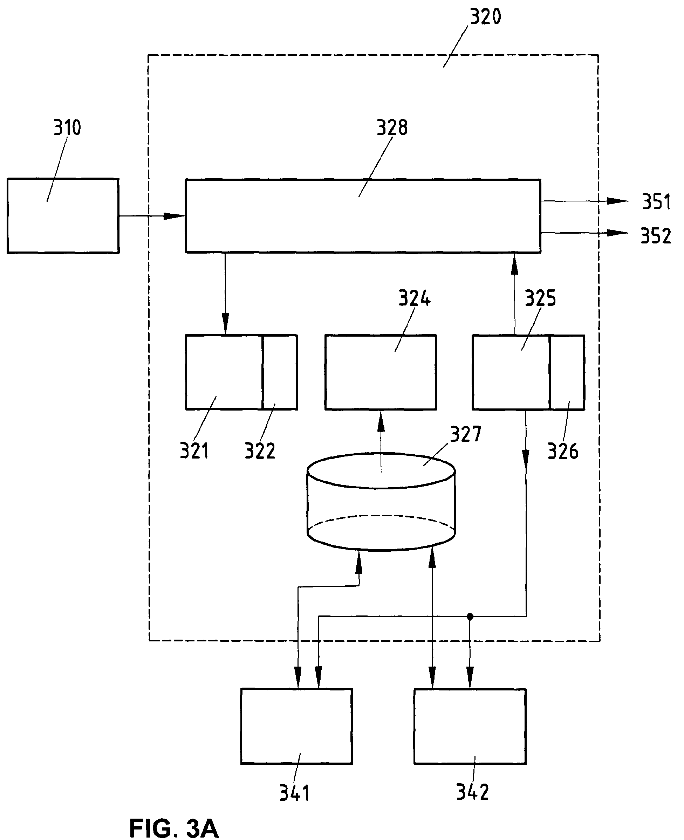

Die nachfolgende Beschreibung einer weiteren Ausführungsform eines User-Moduls nimmt Bezug auf Fig. 3A. Wie aus Fig. 3A ersichtlich, ist das User-Modul 320 einerseits mit der TK-Anlage 310 des Kunden und andererseits mit den Providern 351 und 352 verbunden. Das User-Modul 320 umfasst ein Speichermedium 327, beispielsweise ein EEPROM oder eine Harddisk, zum Speichern von Tarifinformationen, welche in der vorliegenden Ausführungsform neben den oben erwähnten Tariffunktionen zusätzlich Vertragsbedingungen umfassen. Die Vertragsbedingungen ihrerseits umfassen Vertragsfunktionen, welche als ausführbare Programmkomponenten implementiert sind, und welche sich von den Tariffunktionen dadurch unterscheiden, dass sie nur wirksam sind, wenn der zugehörige, noch zu erläuternde, Vertragsindikator gesetzt ist, d.h. wenn zwischen dem Kunden und dem betreffenden Provider ein Vertrag besteht. Zur Versorgung mit Tarifinformationen und/oder Tariffunktionen und/oder Vertragsbedingungen und/oder Vertragsfunktionen steht das User-Modul 320 in Verbindung mit den Provider-Modulen 341 und 342. Weiter umfasst das User-Modul 320 eine Analyseeinheit 321 zum Erfassen und Auswerten von Verbindungsdaten der vom Kunden getätigten Verbindungen und einen Speicher 322 zum Speichern der Verbindungsdaten und/oder der Auswertung. Als weitere Komponenten umfasst das User-Modul eine Optimierungseinheit 324 zur automatischen Bestimmung des optimalen Providers oder der optimalen Provider für die Telekommunikationsverbindungen des Kunden unter Berücksichtigung der Tarifinformationen und/oder Tariffunktionen und/oder Vertragsbedingungen und/oder Vertragsfunktionen und der Auswertung von Verbindungsdaten der vom Kunden getätigten Verbindungen und eine Verbindungseinheit 328 zur automatischen Herstellung der gewünschten Verbindungen über den oder die optimalen Provider.

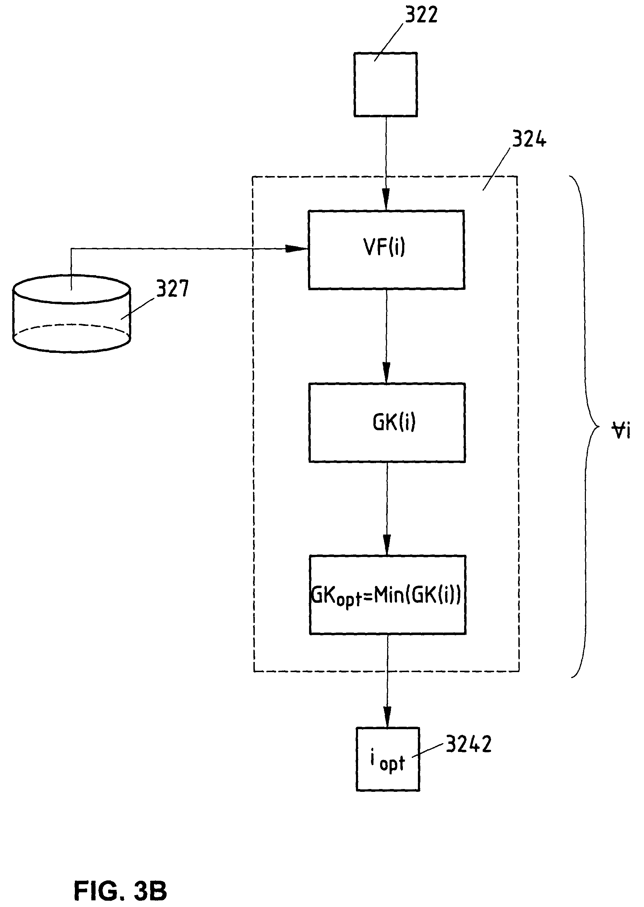

In der vorliegenden Ausführungsform umfasst die Optimierungseinheit 324 ein Computerprogramm (nicht gezeigt), um für einen gewissen Zeitraum und/oder eine gewisse Vertragsdauer auf Grund der Tarifinformationen und/oder Tariffunktionen und/oder Vertragsbedingungen und/oder Vertragsfunktionen und der Auswertung von Verbindungsdaten der vom Kunden getätigten Verbindungen den optimalen Provider zu bestimmen. Die nachfolgende Beschreibung einer bevorzugten Ausführungsform der Optimierungseinheit 324 nimmt Bezug auf Fig. 3B. In der Beschreibung der Optimierungseinheit 324 wird nicht näher unterschieden zwischen Tarif- und Vertragsfunktionen, sondern lediglich der Begriff Vertragsfunktionen verwendet, da die Unterscheidung keinen Einfluss hat auf die Bestimmung des optimalen Providers. Das Computerprogramm der Optimierungseinheit 324 benützt Daten aus zwei Quellen, nämlich Vertragsfunktionen VF(j), welche in einem Speichermedium 327 gespeichert sind (wobei (j) eine Indexvariable bezeichnet), und die oben erwähnte Auswertung von Verbindungsdaten der vom Kunden getätigten Verbindungen, welche in einem Speicher 322 gespeichert sind. In einer Ausführungsvariante benützt das Computerprogramm direkt die Verbindungsdaten der vom Kunden getätigten Verbindungen. Das Computerprogramm der Optimierungsfunktion 324 ruft in einem ersten Schritt eine Vertragsfunktion VF(j) auf, wobei die Auswertung von Verbindungsdaten der vom Kunden getätigten Verbindungen als Eingangsparameter dient, und berechnet unter Verwendung der Vertragsfunktion VF(j) die Gesamtkosten GK(j) (oder eine Schätzung davon) der in einem vorgegebenen Zeitraum, beispielsweise im letzten Monat, getätigten Verbindungen. In einer Ausführungsvariante werden in der oben erwähnten Auswertung von Verbindungsdaten der vom Kunden getätigten Verbindungen eine Trendanalyse oder Prognose erstellt und die Gesamtkosten GK(j) im vorgegebenen Zeitraum, beispielsweise im nächsten Monat, auf Grund dieser Prognose berechnet. Das Computerprogramm der Optimierungsfunktion 324 vergleicht anschliessend die berechneten Gesamtkosten GK(j) (oder eine Schätzung davon) mit den Gesamtkosten aus vorangehenden Berechnungsgängen, um diejenige Vertragsfunktion VF(jₒₚₜ) zu bestimmen, welche die kleinsten Gesamtkosten GKₒₚₜ ergibt (d.h. GKₒₚₜ = Min (GK(j)) ). Die so bestimmte Vertragsfunktion VF(jₒₚₜ) und/oder deren Indexvariable jₒₚₜ werden in einem Ausgangsspeicher 3242 gespeichert. Dieser Berechnungsgang wird für alle in Frage kommenden Vertragsfunktionen VF(j) wiederholt. Die Vertragsfunktion VF(jₒₚₜ) ist mit einem Provider verknüpft, von welchem die Vertragsfunktion VF(jₒₚₜ) stammt, so dass die Vertragsfunktion VF(jₒₚₜ) und/oder deren Indexvariable jₒₚₜ im Ausgangsspeicher 3242 angeben, welches der optimale Provider für den vorgegebenen Zeitraum ist.

Zur Unterstützung von Online-Verträgen umfasst das User-Modul 320 in Fig. 3A zusätzlich eine Vertragseinheit 325 und ein mit der Vertragseinheit 325 verbundenes Register 326 mit Vertragsindikatoren, welche anzeigen, mit welchen Providern ein Vertrag abgeschlossen wurde. Die Vertragseinheit 325 steht in Verbindung mit der Optimierungseinheit 324 und der Verbindungseinheit 328 und umfasst ein User Interface zur Anzeige der von der Optimierungseinheit 324 für einen gewissen Zeitraum bestimmten optimalen Provider, zum Setzen und/oder Löschen der Vertragsindikatoren (d.h. zur Eingabe und/oder Sistierung von zeitlich begrenzten Verträgen) und zur Anzeige der Vertragsindikatoren (d.h. der abgeschlossenen Verträge), sowie Übermittlungs- und Sicherheitsfunktionen, wie beispielsweise eine Authentifizierung, Ver- und Entschlüsselung und eine Empfangsbestätigung, welche Übermittlungs- und Sicherheitsfunktionen sicherstellen, dass beim Setzen und Löschen eines Vertragsindikators im User-Modul 320 das Provider-Modul des betreffenden Providers automatisch Mitteilung davon erhält. In einer Ausführungsvariante wird beim Setzen und Löschen eines Vertragsindikators im User-Modul 320 im Provider-Modul des betreffenden Providers automatisch ein dem Kunden zugeordneter Vertragsindikator gesetzt respektive gelöscht. In einer weiteren Ausführungsvariante werden die Vertragsindikatoren im User-Modul 320 und in den Provider-Modulen der betreffenden Provider auf Grund der von der Optimierungseinheit 324 für einen gewissen Zeitraum ermittelten optimalen Provider automatisch gesetzt und/oder gelöscht. Das System verfügt damit über die Möglichkeit, automatisch zeitlich begrenzte Online-Verträge abzuschliessen, und den Vertragszustand im User-Modul 320 und in den Provider-Modulen der betreffenden Provider (d.h. der optimalen Provider) anzuzeigen. Auf Grund der Vertragsindikatoren (d.h. auf Grund der abgeschlossenen Verträge) werden die gewünschten Verbindungen vom Verbindungsmodul 328 automatisch über die optimalen Provider hergestellt, während die optimalen Provider den Kunden während der Vertragsdauer mit Telekommunikationsverbindungen versorgen.

In einer Ausführungsvariante wird die Verbindungsqualität bei der Bestimmung des optimalen Providers mit berücksichtigt, indem beispielsweise die Tarif- und/oder Vertragsfunktionen eines Providers, dessen Verbindungsqualität Anlass zu Beanstandungen gab, temporär gesperrt werden, oder indem die Verbindungskosten, welche mit Hilfe einer Tarif- und/oder Vertragsfunktion des betreffenden Providers berechnet wurden, mit einem Zuschlag versehen werden.

## Patentansprüche

1. System zur automatischen Bestimmung eines oder mehrerer Provider für Telekommunikationsverbindungen, welches System ein User-Modul und ein oder mehrere Provider-Module umfasst, welches User-Modul und welche Provider-Module Kommunikationsmittel umfassen, um miteinander zu kommunizieren, welche Provider-Module Mittel umfassen, um das User-Modul mit Tarifinformationen zu versorgen, welches User-Modul Optimierungsfunktionen umfasst, um auf Grund der Tarifinformationen automatisch den oder die optimalen Provider für die gewünschten Telekommunikationsverbindungen zu bestimmen, und welches User-Modul Mittel umfasst, um die gewünschten Telekommunikationsverbindungen über den oder die optimalen Provider herzustellen, **gekennzeichnet dadurch,**
**dass** die genannten Tarifinformationen Tariffunktionen umfassen, welche als ausführbare Programmkomponenten implementiert sind, und dass das User-Modul und die Provider-Module Mittel umfassen, um die Tariffunktionen als ausführbare Programmkomponenten zu speichern und/oder auszuführen.

2. System nach Anspruch 1, **gekennzeichnet dadurch, dass** das User-Modul Analysefunktionen zur Erfassung und Auswertung von Verbindungsdaten der vom Kunden getätigten Verbindungen umfasst, und dass das User-Modul zusätzliche Optimierungsfunktionen umfasst, um die Resultate der genannten Auswertung bei der Bestimmung des oder der optimalen Provider zu berücksichtigen.

3. System nach einem der Ansprüche 1 oder 2, **gekennzeichnet dadurch, dass** das User-Modul und die Provider-Module Vertragsindikatoren umfassen, um anzuzeigen, ob zwischen dem Kunden und einem ausgewählten Provider ein Vertrag abgeschlossen wurde, und dass das User-Modul Mittel umfasst, um die genannten Vertragsindikatoren im User-Modul und/oder im Provider-Modul des ausgewählten Providers zu setzen.

4. System nach einem der Ansprüche 1 bis 3, **gekennzeichnet dadurch, dass** die Tarifinformationen Vertragsbedingungen umfassen, welche Vertragsbedingungen Vertragsfunktionen enthalten, welche als ausführbare Programmkomponenten implementiert sind, und dass das User-Modul und die Provider-Module Mittel umfassen, um die Vertragsfunktionen als ausführbare Programmkomponenten zu speichern und/oder zu übermitteln und/oder zu empfangen und/oder aufzurufen und/oder auszuführen, und dass das User-Modul zusätzliche Optimierungsfunktionen umfasst, um für einen gewissen Zeitraum auf Grund der Tarifinformationen und/oder Tariffunktionen und auf Grund der Vertragsbedingungen und/oder Vertragsfunktionen und auf Grund der genannten Auswertung von Verbindungsdaten der vom Kunden getätigten Verbindungen den oder die optimalen Provider zu ermitteln.

5. System nach einem der Ansprüche 3 oder 4, **gekennzeichnet dadurch, dass** das User-Modul Mittel umfasst, um die genannten Vertragsindikatoren im User-Modul und/oder in den Provider-Modulen der optimalen Provider automatisch zu setzen.

6. System nach einem der Ansprüche 1 bis 5, **gekennzeichnet dadurch, dass** das User-Modul und die Provider-Module Mittel umfassen, um auf Initiative der Provider aktiv neue Tarifinformationen in das User-Modul zu laden.

7. User-Modul zur automatischen Bestimmung eines oder mehrerer Provider für Telekommunikationsverbindungen, welches User-Modul mit einem oder mehreren Provider-Modulen verbunden ist, welches User-Modul und welche Provider-Module Kommunikationsmittel umfassen, um miteinander zu kommunizieren, welche Provider-Module Mittel umfassen, um das User-Modul mit Tarifinformationen zu versorgen, welches User-Modul Optimierungsfunktionen umfasst, um auf Grund der Tarifinformationen automatisch den oder die optimalen Provider für die gewünschten Telekommunikationsverbindungen zu bestimmen, und welches User-Modul Mittel umfasst, um die gewünschten Telekommunikationsverbindungen über den oder die optimalen Provider herzustellen, **gekennzeichnet dadurch**,
dass die genannten Tarifinformationen Tariffunktionen umfassen, welche als ausführbare Programmkomponenten implementiert sind, und dass das User-Modul Mittel umfasst, um die Tariffunktionen als ausführbare Programmkomponenten zu speichern und/oder auszuführen.

8. User-Modul nach Anspruch 7, **gekennzeichnet dadurch, dass** das User-Modul Analysefunktionen zur Erfassung und Auswertung von Verbindungsdaten der vom Kunden getätigten Verbindungen umfasst, und dass das User-Modul zusätzliche Optimierungsfunktionen umfasst, um die Resultate der genannten Auswertung bei der Bestimmung des oder der optimalen Provider zu berücksichtigen.

9. User-Modul nach einem der Ansprüche 7 oder 8, **gekennzeichnet dadurch, dass** das User-Modul Vertragsindikatoren umfasst, um anzuzeigen, ob zwischen dem Kunden und einem ausgewählten Provider ein Vertrag abgeschlossen wurde, und dass das User-Modul Mittel umfasst, um die genannten Vertragsindikatoren im User-Modul automatisch zu setzen.

10. User-Modul nach einem der Ansprüche 7 bis 9, **gekennzeichnet dadurch, dass** die Tarifinformationen Vertragsbedingungen umfassen, welche Vertragsbedingungen Vertragsfunktionen enthalten, welche als ausführbare Programmkomponenten implementiert sind, und dass das User-Modul Mittel umfasst, um die Vertragsfunktionen als ausführbare Programmkomponenten zu speichern und/oder zu übermitteln und/oder zu empfangen und/oder aufzurufen und/oder auszuführen, und dass das User-Modul zusätzliche Optimierungsfunktionen umfasst, um für einen gewissen Zeitraum auf Grund der Tarifinformationen und/oder Tariffunktionen und auf Grund der Vertragsbedingungen und/oder Vertragsfunktionen und auf Grund der genannten Auswertung von Verbindungsdaten der vom Kunden getätigten Verbindungen den oder die optimalen Provider zu ermitteln.

11. Verfahren zur automatischen Bestimmung eines oder mehrerer Provider für Telekommunikationsverbindungen unter Verwendung eines User-Moduls und eines oder mehrerer Provider-Module, in welchem Verfahren das User-Modul und die Provider-Module miteinander kommunizieren, in welchem Verfahren die Provider-Module das User-Modul mit Tarifinformationen versorgen, und in welchem Verfahren das User-Modul auf Grund der Tarifinformationen mittels Optimierungsfunktionen automatisch den oder die optimalen Provider für die gewünschten Telekommunikationsverbindungen bestimmt, und in welchem Verfahren das User-Modul die gewünschten Telekommunikationsverbindungen über den oder die optimalen Provider herstellt, **gekennzeichnet dadurch**,
dass die genannten Tarifinformationen Tariffunktionen umfassen, welche als ausführbare Programmkomponenten implementiert sind, und dass die Tariffunktionen als ausführbare Programmkomponenten gespeichert und/oder ausgeführt werden.

12. Verfahren nach Anspruch 11, **gekennzeichnet dadurch, dass** das User-Modul Verbindungsdaten der vom Kunden getätigten Verbindungen erfasst und auswertet, und dass das User-Modul die Resultate der genannten Auswertung bei der Bestimmung des optimalen Providers oder der optimalen Provider berücksichtigt.

13. Verfahren nach einem der Ansprüche 11 oder 12, **gekennzeichnet dadurch, dass** durch Vertragsindikatoren im User-Modul und in den Provider-Modulen angezeigt wird, ob zwischen dem User und einem ausgewählten Provider ein Vertrag abgeschlossen wurde, und dass die genannten Vertragsindikatoren im User-Modul und/oder im Provider-Modul des ausgewählten Providers vom User-Modul aus gesetzt werden.

14. Verfahren nach einem der Ansprüche 11 bis 13, **gekennzeichnet dadurch, dass** die Tarifinformationen Vertragsbedingungen umfassen, welche Vertragsbedingungen Vertragsfunktionen enthalten, welche als ausführbare Programmkomponenten implementiert sind, und dass die Vertragsfunktionen als ausführbare Programmkomponenten gespeichert und/oder übermittelt und/oder empfangen und/oder aufgerufen und/oder ausgeführt werden, und dass für einen gewissen Zeitraum auf Grund der Tarifinformationen und/oder Tariffunktionen und auf Grund der Vertragsbedingungen und/oder Vertragsfunktionen und auf Grund der genannten Auswertung von Verbindungsdaten der vom Kunden getätigten Verbindungen der oder die optimalen Provider ermittelt werden.

15. Verfahren nach einem der Ansprüche 13 oder 14, **gekennzeichnet dadurch, dass** das User-Modul die genannten Vertragsindikatoren im User-Modul und/oder in den Provider-Modulen der optimalen Provider automatisch setzt.

16. Verfahren nach einem der Ansprüche 11 bis 15, **gekennzeichnet dadurch, dass** die Provider auf eigene Initiative aktiv neue Tarifinformationen in das User-Modul laden.
